# DEMANDE DE BREVET EUROPEEN

(11) **EP 4 847 867 A1**
(43) Date de publication de la demande: **02.12.2026**
(21) Numéro de dépôt: 26179300.4
(22) Date de dépôt: 18.05.2026
(51) Int. Cl.: F28D 15/02

(54) **CALODUC A CANAUX REENTRANTS OBTENU PAR AU MOINS DEUX PIECES S ETENDANT SUR AU MOINS UNE LONGUEUR DU CALODUC ET FRETTEES L UNE DANS L AUTRE, SYSTEME ASSOCIE**

(30) Priorité: 28.05.2025 FR 2505817
(71) Demandeur: Commissariat à l'Énergie Atomique et aux Énergies Alternatives, 75015 Paris (FR)
(72) Inventeur: MARIOTTO, Mathieu, 38054 GRENOBLE CEDEX 09 (FR); LARGILLER, Grégory, 38054 GRENOBLE CEDEX 09 (FR); CLAUDET, Vincent, 31400 TOULOUSE (FR)
(74) Mandataire: Ipsilon

(57) **Abrégé**

L'invention concerne un caloduc (1) à canaux réentrants, s'étendant le long d'une direction longitudinale (X), comprenant une enceinte étanche (2) s'étendant entre une première extrémité longitudinale (3), destinée à être échauffée par une source chaude SC pour former, au sein de l'enceinte, un évaporateur et une deuxième extrémité longitudinale (4) destinée à être refroidie par une source froide SF pour former, au sein de l'enceinte, un condenseur, l'enceinte étanche délimitant une portion adiabatique entre l'évaporateur et le condenseur, au moins une portion parmi l'évaporateur, la portion adiabatique et le condenseur comprenant au moins deux pièces (100, 101) assemblées mécaniquement l'une à l'autre de manière permanente en définissant entre elles au moins un canal de liaison définissant une interface liquide-vapeur reliant un canal de circulation de vapeur et un(des) canal(ux) de circulation de liquide(s).

## Description

### Domaine technique

La présente invention concerne un caloduc à canaux réentrants.

La présente invention vise principalement à améliorer le rapport d'aspect d'un tel caloduc, tout en conservant un faible coût de fabrication.

### Technique antérieure

Un caloduc est un dispositif thermique permettant de transférer une quantité d'énergie depuis une source chaude vers une source froide, distantes d'une certaine longueur.

Un caloduc comporte une enceinte hermétiquement close, un fluide de travail et un réseau capillaire. Lors de la fabrication, tout l'air présent dans le tube caloduc est évacué et on introduit une quantité de liquide pur permettant de saturer le réseau capillaire. Une fois l'enceinte close, et soumis à une source chaude, il y a établissement d'un équilibre entre la phase liquide et la phase vapeur.

Sous l'effet d'une source chaude appliquée dans une zone à l'une des extrémités longitudinales, désignée évaporateur, une partie de la phase liquide se vaporise et absorbe le flux thermique sous forme latente en induisant une légère surpression qui provoque le mouvement de la vapeur vers une zone à l'autre extrémité longitudinale, désignée condenseur où la source froide s'applique. Au condenseur, la vapeur se condense et repasse en phase liquide. Le fluide condensé (les condensats) circule dans le réseau capillaire et revient vers l'évaporateur pour refaire un cycle, sous l'effet de forces capillaires, lorsque le caloduc n'est pas soumis à la gravité. Le retour du fluide liquide du condenseur à l'évaporateur est obtenu par pompage capillaire.

En effet, en l'absence de gravité, le moteur du caloduc est le pompage capillaire du fluide qui s'opère au niveau des zones d'interface liquide-vapeur spécifiquement configurées pour qu'un ménisque se forme, résultant de l'angle de contact entre le fluide et le métal constituant le caloduc (lui-même dépendant de la tension superficielle du fluide, et des tensions interfaciales solide/liquide et solide/vapeur). Plus les forces de pompage capillaire sont grandes par rapport aux diverses forces de frottement des phases du fluide avec les parois et entre elles, plus le caloduc est performant et peut transporter une grande quantité d'énergie. Les caloducs concernés par cette absence de gravité sont par exemple ceux mis en œuvre dans des conditions de fonctionnement spatiales, comme pour la thermalisation de système de télécommunication des satellites.

En régime terrestre, avec la gravité, la problématique du retour de phase liquide est tout autre, et d'autres configurations d'interface liquide-vapeur/paroi sont mises en œuvre.

Les caloducs à rainures fonctionnent sur le principe du pompage capillaire. Ils comportent un tube, dans lequel la surface intérieure comporte des rainures axiales/longitudinales [1] ou légèrement en forme de spirale. Les caloducs à rainures comportent un cœur vapeur et un réseau capillaire dans lequel circule la phase liquide. Du fait d'une variation de courbure de l'interface liquide-vapeur- entre la zone condenseur et la zone évaporateur, un gradient de pression apparaît dans le liquide, qui mène à une variation de pression capillaire. Plus la largeur des rainures est petite, plus l'effet de pompage capillaire est important.

Par ailleurs, des rainures profondes permettent d'obtenir une section de passage pour le retour liquide grande, et donc de minimiser la perte de pression.

La puissance maximale que peuvent transporter des caloducs à rainures est généralement fixée par la limite capillaire dont le terme moteur est la pression capillaire, et le terme limitant essentiellement la perte de pression liquide dans les rainures et, dans une moindre mesure les pertes de charge de l'écoulement vapeur.

Les caloducs à rainures réentrantes ou à canaux réentrants sont des exemples particuliers de caloducs à rainures, dans lesquels les rainures présentent un canal de liaison étroit par rapport au reste de la rainure, ce qui permet d'augmenter l'effet de pompage capillaire tout en limitant les pertes de charge. Ces caloducs sont utilisés principalement dans le domaine spatial, par exemple pour la régulation thermique dans les satellites et/ou les engins spatiaux.

Les techniques de réalisation connues des caloducs à rainures, et notamment des caloducs à rainures réentrantes, ne permettent pas d'obtenir des rainures ayant une profondeur sensiblement plus grande que leur largeur.

Ces caloducs sont réalisés essentiellement par extrusion. Avec une telle technique, le rapport profondeur sur largeur de rainures rectangulaires est de l'ordre de 1.

Dans le cas des rainures réentrantes, les contraintes de fabrication sont encore plus draconiennes, limitant la largeur, la longueur du rétrécissement et la section de la partie réentrante.

Ainsi, comme le montrent les auteurs de la publication [2], la forme des rainures réentrantes est limitée par les contraintes mécaniques liées à l'extrusion.

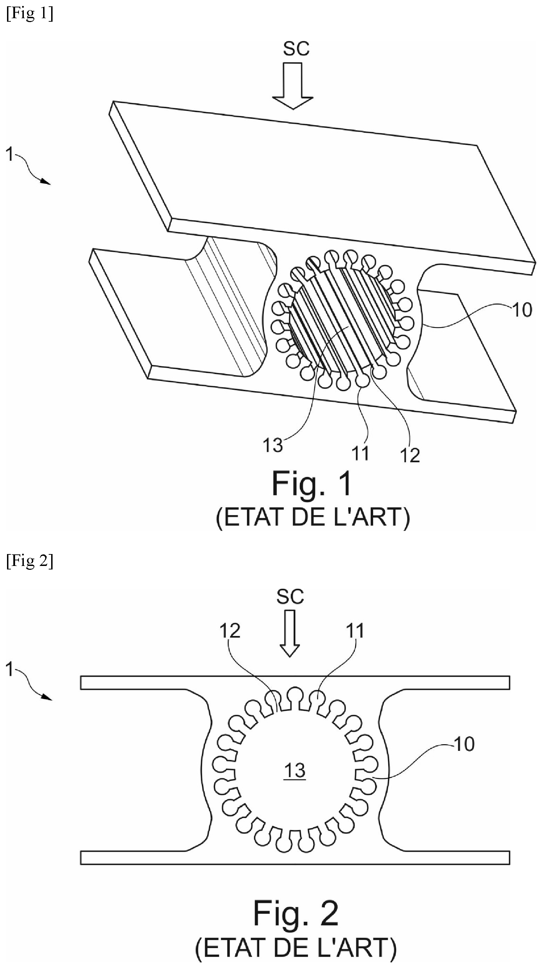

Les figures 1 et 2 montrent un exemple de caloduc à rainures réentrantes à section transversale en forme générale d'Omega.

L'évaporateur d'un tel caloduc 1, axisymétrique de forme générale cylindrique, comprend une paroi périphérique 10 dans laquelle sont réalisés une pluralité de canaux 11 à section transversale en forme générale d'Omega, régulièrement répartis angulairement et débouchant par l'intermédiaire d'un canal de liaison 12 sur un creux central cylindrique 13 dans lequel circule la phase vapeur. La paroi périphérique 10 est en contact avec une source chaude (SC).

Les principaux avantages d'une technique de réalisation par extrusion pour des caloducs à canaux réentrants destinés à des applications spatiales sont le faible coût de fabrication et la possibilité d'avoir de grande longueur de caloduc, plusieurs mètres, sans être dépendant de machines d'usinage et de fours de brasure, très complexes, chers et peu répandus.

La principale limite d'une fabrication par extrusion est que les performances de capacité de transport de flux thermique en W.m. sont moindres, du fait de la valeur faible du rapport d'aspect géométrique entre les dimensions des sections des différents canaux à l'intérieur du caloduc, liquide, vapeur et de liaison.

Or, de fait, le canal de liaison, où s'établit le ménisque d'interface liquide-vapeur entre les deux phases présentes dans un caloduc, qui détermine directement la force de pompage capillaire disponible doit être le plus petit possible, afin d'assurer au mieux le retour de la phase liquide venant du condenseur vers l'évaporateur,
Également les pertes de charges de la phase liquide et de la phase vapeur vont limiter in fine les performances du caloduc, et il faut donc pour minimiser lesdites pertes, la plus grande section de passage possible et le moins de parois possible.

Ainsi, l'extrusion d'aluminium ne permet pas de dépasser des rapports d'aspect entre les sections des canaux liquides et les canaux de liaison, qu'il serait nécessaire de franchir pour augmenter les capacités de transport de flux thermique.

Concrètement, les technologies actuelles présentes sur le marché, mettent en œuvre, au minimum, des canaux de liaison de largeur de 500µm.

Différentes réalisation à partir d'extrusion ont été proposées.

La demande de brevet CN102878697A1 divulgue ainsi un absorbeur thermique mettant en œuvre plusieurs profils extrudés en aluminium à rainure droite formant chacun un caloduc à rainures réentrantes, assemblés par soudure au niveau de collecteurs, eux-mêmes formant chacun un élément d'un échangeur thermique.

Le brevet CN106323042B divulgue un récupérateur d'énergie entre deux fluides (flux d'air) réalisa par assemblage d'un micro-caloduc fabriqué selon un profil extrudé et des canaux assemblés longitudinalement eux aussi en profil extrudés.

Par conséquent, face à des demandes croissantes de thermalisation en termes de puissances, densités de puissances, de contraintes d'intégration et de compacité, de plus en plus exigeantes, les technologies d'aujourd'hui de fabrication par extrusion des caloducs à canaux réentrant sont limitantes.

Une autre technique utilise l'usinage mécanique, mais avec cette technique également le rapport profondeur sur largeur n'est pas sensiblement supérieur à 1. En outre, cette technique a un prix de revient relativement élevé et n'est pas adaptée à la fabrication en moyenne et grande série.

Une autre technique utilise la gravure chimique. Mais elle ne permet pas non plus d'avoir un rapport profondeur sur largeur important.

Le brevet EP3553445B1 propose un caloduc réalisé par empilement de plaques solidarisées entre elles avec étanchéité, dont les plaques d'extrémité formant des plaques de fermeture et les plaques intercalaires sont structurées, de sorte que leur empilement délimite des rainures réentrantes s'étendant sur toute la longueur du caloduc. Les plaques peuvent être assemblées par différentes techniques de soudure, brasure ou collage.

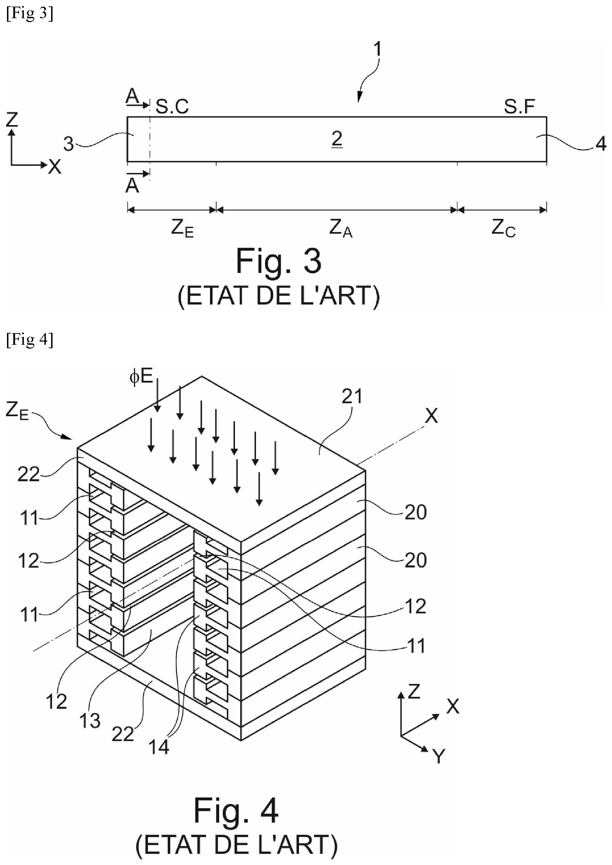

Sur les figures 3 à 5, on peut voir un exemple de caloduc 1 à rainures réentrantes à section parallélépipédique, réalisé selon le brevet EP3553445B1.

Cet exemple de caloduc 1 à pompage capillaire s'étendant selon un axe longitudinal X est vu de l'extérieur sur la figure 3.

Le caloduc 1 comporte une enceinte étanche 2 s'étendant selon l'axe longitudinal X entre une première extrémité longitudinale 3 et une deuxième extrémité longitudinale 4. La première extrémité 3 est par exemple destinée à être à être échauffée par une source chaude SC pour former au sein de l'enceinte un évaporateur Z.E. La deuxième extrémité longitudinale 4 est destinée à être refroidie par une source froide SF pour former au sein de l'enceinte un condenseur Zc.

L'enceinte étanche 2 délimite intérieurement une portion adiabatique Z.A entre l'évaporateur et le condenseur.

La source chaude est par exemple un composant électrique ou électronique, un stockage de chaleur, un réacteur chimique exothermique. La source froide est par exemple une surface radiative, des ailettes en convection forcée, des plaques froides en écoulement mono ou diphasique, un stockage de froid, une réaction chimique endothermique...

L'enceinte étanche 2 est réalisée par empilement et assemblage de plaques d'extrémité 22 aussi appelés plaques de fermeture et de modules de plaques intercalaires 20 agencés entre les plaques d'extrémité 22.

Un module comprend au moins deux plaques intercalaires, les plaques des différents modules de plaques intermédiaires 20 comprenant des fenêtres ou d'autres structurations, étant empilées de sorte à délimiter des canaux 11, 12, 13.

Malgré des performances théoriques bien supérieures, le procédé de fabrication tel que décrit dans le brevet EP3553445B1, peut avoir certaines limites que l'on peut résumer ainsi:
- le temps de fabrication important, avec des étapes diverses, complexes, et longues ;
- pour des caloducs de longueurs de plusieurs mètres, les machines d'usinage et les fours de brasure sous vide deviennent très complexes, chers et peu répandus.

Ces limites peuvent aussi être dépassées par la mise en œuvre de la présente invention.

Par conséquent, il existe un besoin pour améliorer encore les caloducs à canaux réentrants, et ce afin de pallier les inconvénients précités, et notamment pour obtenir un design où les rapports d'aspect ne sont pas contraints, qui reste peu cher à fabriquer et avec des moyens de fabrication pas complexes pour des caloduc de plusieurs mètres.

Le but général de l'invention est alors de répondre au moins en partie à ce besoin.

### Exposé de l'invention

Pour ce faire, l'invention a tout d'abord pour objet un caloduc à canaux réentrants, s'étendant le long d'une direction longitudinale (X), comprenant une enceinte étanche s'étendant entre une première extrémité longitudinale, destinée à être échauffée par une source chaude SC pour former, au sein de l'enceinte, un évaporateur et une deuxième extrémité longitudinale destinée à être refroidie par une source froide SF pour former, au sein de l'enceinte, un condenseur, l'enceinte étanche délimitant une portion adiabatique entre l'évaporateur et le condenseur.

Selon l'invention, au moins une portion parmi l'évaporateur, la portion adiabatique et le condenseur comprenant au moins deux pièces assemblées mécaniquement l'une à l'autre de manière permanente en définissant entre elles au moins un canal de liaison définissant une interface liquide-vapeur reliant un canal de circulation de vapeur et un(des) canal(ux) de circulation de liquide(s).

Selon une configuration avantageuse, la portion adiabatique du caloduc peut être exempte de zone d'échange entre le canal vapeur et le(s) canal(ux) liquide(s) tandis que l'évaporateur et le condenseur comprennent chacun au moins deux pièces assemblées mécaniquement l'une à l'autre de manière permanente en définissant entre elles au moins un canal de liaison définissant une interface liquide-vapeur reliant un canal de circulation de vapeur et un(des) canal(ux) de circulation de liquide(s).

Avantageusement, les deux pièces sont frettées l'une dans l'autre et/ou ou soudées et/ou brasées et/ou collées l'une à l'autre.

On rappelle ici que le frettage est l'action d'assembler deux pièces quasiment sans jeu à température nominale fonctionnelle. Une des deux pièces est dite « la frette » et la pièce rapportée et assemblée est dite « la frettée ».

Du faut du gradient thermique imposé à l'une des pièces, un élément ou des éléments de la pièce frettée va ou vont s'insérer facilement dans la frette, pour in fine, non soumis au gradient thermique, rester bloquées dans la frette et assurer un montage serré sans jeu mécanique avec une très bonne conductance de contact.

Selon un mode de réalisation avantageuse, l'évaporateur, la portion adiabatique et le condenseur sont de section transversale uniforme selon la direction longitudinale (X) et formant un ensemble monobloc.

Selon un mode alternatif, au moins deux portions parmi l'évaporateur, la portion adiabatique et le condenseur sont de section transversale non uniforme selon la direction longitudinale (X) et assemblées entre elles par soudage.

De préférence, le soudage est choisi parmi le soudage à l'arc électrique, le soudage à l'arc (TIG acronyme anglo-saxon pour «Tungsten Inert Gas »), le soudage à l'arc électrique dans une atmosphère gazeuse de protection (MIG ou MAG acronymes anglo-saxon respectivement pour « Metal Inert Gas » et « Metal Active Gas »), le soudage plasma, le soudage laser, le soudage orbital.

Les méthodes de fabrication additive de pièces en métal, de type fusion laser sur lit de poudre peuvent être utilisées pour fabriquer au moins une des portions, dans le cas où des configurations particulières, notamment lorsqu'une intégration de media poreux serait requise.

De préférence les portions assemblées entre elles par soudage sont préalablement emboitées au moins partiellement l'une dans l'autre.

Avantageusement, la largeur d'un canal de liaison de la (des) portion(s) à deux pièces assemblées l'une à l'autre est inférieure à 500 µm, de préférence comprise entre 50 et 200 µm.

Avantageusement encore, les au moins deux pièces sont assemblées l'une à l'autre en définissant entre elles également le canal de circulation de vapeur et le(les) canal(ux) de circulation de liquide(s).

De préférence, au moins une des deux pièces est un profilé extrudé.

Selon une première configuration avantageuse, la caloduc est axisymétrique de forme générale cylindrique, au moins une portion parmi l'évaporateur, la portion adiabatique et le condenseur comprend au moins une pièce intérieure assemblée mécaniquement de manière permanente à une pièce extérieure creuse comprenant une paroi cylindrique périphérique, en définissant au moins un canal liquide à section transversale en forme générale d'Omega, et débouchant par l'intermédiaire d'un canal de liaison sur un canal vapeur, les canaux liquide, de liaison et vapeur étant rectilignes et s'étendant selon la direction X.

Selon cette première configuration avantageuse, et une première variante, la au moins une portion est constituée de deux pièces, de préférence frettées l'une dans l'autre, en définissant avantageusement une pluralité de canaux liquide régulièrement répartis angulairement et débouchant tous par un canal de liaison sur un unique canal vapeur, central cylindrique.

Selon cette première configuration avantageuse, et une deuxième variante, la au moins une portion est constituée de plus de deux pièces dont une pièce intérieure et une pluralité de pièces intérieures, de préférence frettées les dans l'autre, en définissant une pluralité de canaux liquide régulièrement répartis angulairement et débouchant tous par un canal de liaison sur un unique canal vapeur, central cylindrique.

Selon cette première configuration avantageuse, et une troisième variante, seule une portion, de préférence l'évaporateur, étant constituée de deux pièces, de préférence frettées l'une dans l'autre, en définissant une pluralité de canaux liquides régulièrement répartis angulairement et débouchant chacun par un canal de liaison sur un canal vapeur distinct des autres.

Selon une deuxième configuration avantageuse, le caloduc est de forme générale parallélépipédique, au moins une portion parmi l'évaporateur, la portion adiabatique et le condenseur comprend une pièce formant une portion d'un parallépipède creux, assemblée mécaniquement de manière permanente à au moins une pièce formant une portion complémentaire du parallépipède en définissant au moins canal liquide à section transversale rectangulaire ou carrée, et débouchant par l'intermédiaire d'un canal de liaison sur un canal vapeur, les canaux liquide, de liaison et vapeur étant rectilignes et s'étendant selon la direction X.

Selon cette deuxième configuration avantageuse, et une variante, les deux portions complémentaires étant soudées longitudinalement au moins par leurs parois périphériques et frettées l'une dans l'autre au moins par leurs parois internes.

Selon une troisième configuration avantageuse, le caloduc est forme générale parallélépipédique, au moins une portion parmi l'évaporateur, la portion adiabatique et le condenseur comprend une pièce extérieure formant un parallépipède creux assemblé mécaniquement de manière permanente à au moins une pièce intérieure sous la forme d'un insert en définissant au moins canal liquide à section transversale rectangulaire ou carrée, et débouchant par l'intermédiaire d'un canal de liaison sur un canal vapeur, les canaux liquide, de liaison et vapeur étant rectilignes et s'étendant selon la direction X.

De préférence, les au moins deux pièces assemblées mécaniquement l'une à l'autre de manière permanente présentent une rugosité inférieure ou égale à 0,1 µm. Pour parvenir à ce niveau de faible rugosité on peut polir des profilés extrudés.

Selon un mode de réalisation avantageux, le caloduc comprend deux bouchons étanches soudés respectivement à la première et à la deuxième extrémités longitudinales, au moins un des deux bouchons intégrant au préalable un queusot de remplissage par le fluide de travail du caloduc.

Le matériau constitutif des au moins deux pièces formant au moins la portion de l'enceinte étanche est de préférence choisi parmi l'aluminium, le cuivre, le nickel, un acier inoxydable ou un alliage à base d'au moins deux de ceux-ci, de préférence l'aluminium.

De manière générale, plus le nombre de canaux de liaison est important, plus le nombre de lignes triples d'interface liquide vapeur est également élevé, ce qui permet d'obtenir une meilleure conductance locale à l'évaporateur, croisé avec des limites estimées de fabricabilité (par usinage ou fabrication additive).

L'invention a également pour objet un système comprenant :
- une source froide (SF) ;
- une source chaude (SC) et
- au moins un caloduc à rainures réentrantes tel que décrit précédemment, le caloduc étant agencé de sorte que le flux de chaleur (ϕ_{E} ) de la source chaude (SC) sur l'évaporateur étant sur au moins une face latérale de l'enceinte en regard du canal vapeur ou sur au moins une face latérale en regard du(des) canal(ux) liquide(s), tandis que l'extraction de chaleur au condenseur vers la source froide (SF) étant sur au moins une face latérale de l'enceinte en regard du(des) canal(ux) liquide(s), ou sur une face latérale perpendiculaire à celui-ci (ceux-ci).

Ainsi, l'invention consiste essentiellement à proposer un caloduc à canaux réentrants dont au moins une portion parmi l'évaporateur, le condenseur ou la portion adiabatique est réalisée à partir de deux pièces, de préférence deux profilés obtenus par extrusion, qui sont assemblées mécaniquement l'une avec l'autre de manière permanente, de préférence par frettage l'une dans l'autre, de sorte à ce qu'elles définissent ensemble dans ladite portion au moins un canal de liaison entre les canaux de circulation de liquide et de vapeur.

Un caloduc à canaux réentrants peut avoir des dimensions supérieures au mètre en longueur, et peut fonctionner avantageusement en conditions en microgravité ou zéro gravité.

L'assemblage mécanique des deux pièces selon l'invention permet d'atteindre une largeur de canal de liaison entre canal liquide et vapeur, i.e. là où s'établit le ménisque de d'interface, avantageusement comprise entre 50 et 200µm, typiquement de l'ordre de 100µm.

Le caloduc peut être uniforme sur toute sa longueur ou avec des portions différenciées assemblées l'une à l'autre, de préférence par soudage. Le mode d'assemblage retenu ne déforme pas les portions localement, et qui assure une tenue mécanique adéquate et pérenne. Quelle que soit l'alternative retenue, l'assemblage ou la continuité des portions (évaporateur, portion adiabatique, condenseur) répond aux contraintes de fonctionnement du caloduc, (conduction thermique, continuité du milieux capillaire, tenue mécanique au hautes pression internes).

Grâce à l'invention, on évite la réalisation de parois superflues qui génèrent des pertes de charge limitant in fine la capacité de transport du caloduc.

L'invention apporte de nombreux avantages parmi lesquels on peut citer ceux par rapport aux solutions selon l'état de l'art, notamment un caloduc selon le brevet EP3553445B1:
- la possibilité d'un fort degré de versatilité de design et l'amélioration des performances d'un caloduc selon le brevet EP3553445B1 ;
- la possibilité de faire soit des éléments en série, comme des portions adiabatiques, soit des configurations uniques au cas par cas, comme un évaporateur ;
- un coût de réalisation moindre et des techniques usuelles, notamment du fait des coûts limités de techniques usuelles, comme l'extrusion de profilés, notamment en aluminium et l'assemblage par frettage et/ou par soudure, parfaitement maîtrisées ;
- des tolérances de fabrication de ces techniques usuelles qui permettent des dimensions restreintes de canal de liaison, typiquement au premier ordre, environ de 50µm-100µm à plusieurs centaines de microns, et donc des rapports d'aspects non contraints ;
- potentiellement, des économies de matières et donc de poids linéaire, spécialement avec la raideur supplémentaire apportée par certains inserts frettés et générant une meilleure tenue mécanique en pression ;
- la possibilité d'assemblage de portions différenciées (évaporateur, portion adiabatique, condenseur) qui apporte une grande versatilité et adaptabilité à un caloduc, notamment pour les portions d'extrémité /de remplissage, l'évaporateur, le condenseur, et la forme générale, (ligne droite, coude, té, croix...) ;
- une réduction importante du nombre de caloducs par rapport à ceux utilisés selon l'état de l'art, un seul et unique réseau est même envisageable, procurant à un caloduc selon l'invention une grande efficacité de transport de flux thermique tout en générant des gains de masse, en respectant des spécifications de redondance éventuelles.

Les applications d'un caloduc selon l'invention sont nombreuses parmi lesquelles on peut citer la thermalisation des systèmes embarqués du domaine spatial, dont l'intégration et la masse embarquée sont des critères prioritaires.

De manière générale, l'invention peut être mise en œuvre dans tout système électronique, et son domaine d'application, dont les contraintes d'intégration sont complexes.

D'autres avantages et caractéristiques ressortiront mieux à la lecture de la description détaillée, faite à titre illustratif et non limitatif, en référence aux figures suivantes.

### Brève description des dessins

[Fig 1] la figure 1 est une vue partielle en perspective et en coupe transversale d'un caloduc à rainures réentrantes, axisymétrique de forme générale cylindrique selon l'état de l'art.
[Fig 2] la figure 2 est une vue en coupe transversale du caloduc selon la figure 1.
[Fig 3] la figure 3 est une vue schématique de côté d'un caloduc à rainures réentrantes, de forme générale parallépipédique selon l'état de l'art.
[Fig 4] la figure 4 est une vue en perspective et coupe transversale de la figure 3, au niveau de l'évaporateur du caloduc à rainures réentrantes selon le brevet EP3553445B1.
[Fig 5] la figure 5 est une vue de détail et en coupe transversale de la figure 4.
[Fig 6] la figure 6 est une vue partielle en perspective et coupe transversale, d'un profilé extrudé formant une frette pour la réalisation d'un évaporateur d'un caloduc à canaux réentrants de forme générale cylindrique selon un premier mode de l'invention.
[Fig 7] la figure 7 est une vue en coupe transversale du caloduc selon la figure 6.
[Fig 8] la figure 8 est une vue en perspective, d'un profilé extrudé formant une pièce à fretter dans la frette des figures 6 et 7 pour la réalisation d'un évaporateur d'un caloduc à canaux réentrants selon le premier mode de l'invention.
[Fig 9] la figure 9 est une vue en perspective du profilé extrudé selon la figure 8, une fois usiné pour la réalisation d'ouvertures traversantes.
[Fig 10] la figure 10 est une vue partielle en perspective et coupe transversale, d'un évaporateur d'un caloduc à canaux réentrants de forme générale cylindrique selon le premier mode de l'invention, réalisé par assemblage par frettage du profilé extrudé des figures 8 et 9 dans la frette des figures 6 et 7.
[Fig 11] la figure 11 est une autre vue partielle en perspective et coupe transversale, d'un évaporateur d'un caloduc à canaux réentrants selon de forme générale cylindrique selon le premier mode de l'invention, réalisé par assemblage par frettage du profilé extrudé des figures 8 et 9 dans la frette des figures 6 et 7.
[Fig 12] la figure 12 est une autre vue partielle en perspective et coupe transversale, d'un évaporateur d'un caloduc à canaux réentrants selon de forme générale cylindrique selon le premier mode de l'invention, réalisé par assemblage par frettage du profilé extrudé des figures 8 et 9 dans la frette des figures 6 et 7.
[Fig 13] la figure 13 est une vue partielle en perspective et en coupe transversale d'une portion adiabatique d'un caloduc à rainures réentrantes à évaporateur de forme générale cylindrique selon le premier mode de l'invention.
[Fig 14] la figure 14 est vue partielle en perspective et en coupe transversale d'un condenseur d'un caloduc à rainures réentrantes à évaporateur selon de forme générale cylindrique selon le premier mode de l'invention.
[Fig 15] la figure 15 est une vue en perspective, d'un profilé extrudé formant une pièce à fretter dans la frette des figures 6 et 7 pour la réalisation d'un évaporateur d'un caloduc à canaux réentrants selon un deuxième mode de l'invention..
[Fig 16] la figure 16 est une vue partielle en perspective, d'un évaporateur d'un caloduc à canaux réentrants de forme générale cylindrique selon le deuxième mode de l'invention, réalisé par assemblage par frettage du profilé extrudé de la figure 15 dans la frette des figures 6 et 7.
[Fig 17] la figure 17 est une vue partielle en perspective, d'un évaporateur d'un caloduc à canaux réentrants de forme générale cylindrique selon un troisième mode de l'invention, réalisé par assemblage par frettage d'une pluralité de profilés extrudé individuels dans la frette des figures 6 et 7.
[Fig 18] la figure 18 est une vue en perspective, d'un profilé extrudé formant une pièce à fretter dans la frette des figures 6 et 7 pour la réalisation d'un évaporateur d'un caloduc à canaux réentrants selon un quatrième mode de l'invention..
[Fig 19] la figure 19 est une vue partielle en perspective d'une partie d'un évaporateur d'un caloduc à canaux réentrants de forme générale cylindrique selon le quatrième mode de l'invention, réalisé par assemblage par frettage du profilé extrudé de la figure 18 dans la frette des figures 6 et 7.
[Fig 20] la figure 20 est une autre vue partielle en perspective, d'un évaporateur d'un caloduc à canaux réentrants de forme générale cylindrique selon le quatrième mode de l'invention, réalisé par assemblage par frettage d'une pluralité de profilés extrudés de la figure 18 dans la frette des figures 6 et 7.
[Fig 21] la figure 21 est une vue en perspective d'un caloduc à canaux réentrants de forme générale cylindrique selon l'invention avec ses bouchons d'extrémité.
[Fig 22] la figure 22 est une de détail en perspective à un bouchon d'extrémité intégrant un queusot de remplissage du caloduc selon la figure 21.
[Fig 23] la figure 23 est une vue en perspective et en coupe longitudinale avec des portions différentes entre l'évaporateur, la portion adiabatique et le condenseur du caloduc selon la figure 21.
[Fig 24] la figure 24 est une vue en perspective, d'un profilé extrudé formant une pièce à fretter pour la réalisation d'un évaporateur d'un caloduc à canaux réentrants de forme générale parallépipédique selon un premier mode de l'invention.
[Fig 25] la figure 25 est une vue en perspective, d'un profilé extrudé formant une autre pièce à fretter pour la réalisation d'un évaporateur d'un caloduc à canaux réentrants de forme générale parallépipédique selon le premier mode de l'invention.
[Fig 26] la figure 26 est une vue en perspective, d'un profilé extrudé formant une frette pour la réalisation d'un évaporateur d'un caloduc à canaux réentrants de forme générale parallépipédique selon le premier mode de l'invention.
[Fig 27] la figure 27 est une vue en perspective d'un évaporateur d'un caloduc à canaux réentrants de forme générale parallépipédique selon le premier mode de l'invention, réalisé par assemblage par frettage puis soudage des profilés extrudés des figures 24 et 25 avec la frette de la figure 26.
[Fig 28] la figure 28 est une vue en coupe transversale de la portion adiabatique ou le condenseur d'un caloduc à canaux réentrants de forme générale parallépipédique selon le premier mode et une première variante de l'invention.
[Fig 29] la figure 29 est une vue en coupe transversale de la portion adiabatique ou le condenseur d'un caloduc à canaux réentrants de forme générale parallépipédique selon le premier mode et une deuxième variante de l'invention.
[Fig 30] la figure 30 est une vue en perspective, de profilé extrudé formant des pièce à fretter pour la réalisation d'un évaporateur d'un caloduc à canaux réentrants de forme générale parallépipédique selon un deuxième mode de l'invention.
[Fig 31] la figure 31 est une vue en perspective, d'un profilé extrudé formant une pièce à fretter pour la réalisation d'une portion adiabatique ou le condenseur d'un caloduc à canaux réentrants de forme générale parallépipédique selon un deuxième mode de l'invention.
[Fig 32] la figure 32 est une vue en perspective d'un caloduc à canaux réentrants de forme générale parallépipédique selon le deuxième mode de l'invention, réalisé par assemblage par frettage puis soudage des profilés extrudés des figures 30.
[Fig 33] la figure33 est une vue en perspective d'une portion de base évaporateur d'un caloduc à canaux réentrants de forme générale parallépipédique selon un troisième mode de l'invention.
[Fig 34] la figure 34 est une vue en perspective d'une première variante d'évaporateur d'un caloduc à canaux réentrants de forme générale parallépipédique selon le troisième mode de l'invention, réalisé par assemblage par frettage de la portion de base de la figure 33 avec des profilés extrudés.
[Fig 35] la figure 35 est une vue en perspective d'une deuxième variante d'évaporateur d'un caloduc à canaux réentrants de forme générale parallépipédique selon le troisième mode de l'invention, réalisé par assemblage par frettage de la portion de base de la figure 33 avec des profilés extrudés.
[Fig 36] la figure 36 est une vue en perspective d'une première variante de portion adiabatique d'un caloduc à canaux réentrants de forme générale parallépipédique selon le troisième mode de l'invention.
[Fig 37] la figure 37 est une vue en perspective d'une deuxième variante de portion adiabatique d'un caloduc à canaux réentrants de forme générale parallépipédique selon le troisième mode de l'invention.
[Fig 38] la figure 38 est une vue en perspective d'un caloduc à canaux réentrants de forme générale parallépipédique selon l'invention avec ses bouchons d'extrémité.
[Fig 39] la figure 39 est une de détail en perspective à un bouchon d'extrémité intégrant un queusot de remplissage du caloduc selon la figure 38.
[Fig 40] la figure 40 est une vue en perspective et coupe longitudinale du caloduc selon la figure 38.

### Description détaillée

Les figures 1 à 5 ont déjà été commentées en préambule. Elles ne sont pas détaillées ci-après.

Par souci de clarté, un même élément selon l'art antérieur et l'invention est désigné par la même référence numérique.

On précise ici que la référence SC utilisée dans les figures désigne la source chaude ou, par extension, la zone d'application du flux thermique émis par la source chaude directement sur la face latérale d'une enceinte de caloduc. SF désigne à contrario la source froide ou par extension la zone d'évacuation du flux thermique à évacuer par la source froide directement sur la face latérale d'une enceinte de caloduc.

Par « canal liquide », on comprend un canal dans lequel le fluide de travail du caloduc circule à l'état liquide.

Par « canal vapeur », on comprend un canal dans lequel le fluide de travail du caloduc circule à l'état vapeur.

Les différents exemples illustrent un caloduc 1 à canaux réentrants selon l'invention dont au moins une portion parmi l'évaporateur, la portion adiabatique et le condenseur, est réalisée par un assemblage mécanique longitudinal entre au moins deux pièces sous la forme de profilés extrudés. De préférence, les profilés extrudés sont en aluminium.

L'assemblage mécanique longitudinal est réalisé au minimum par un frettage.

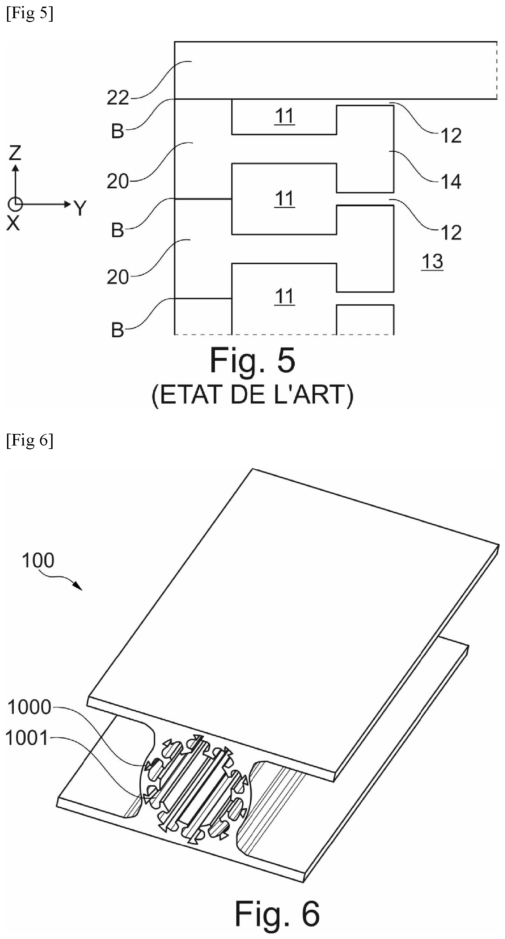

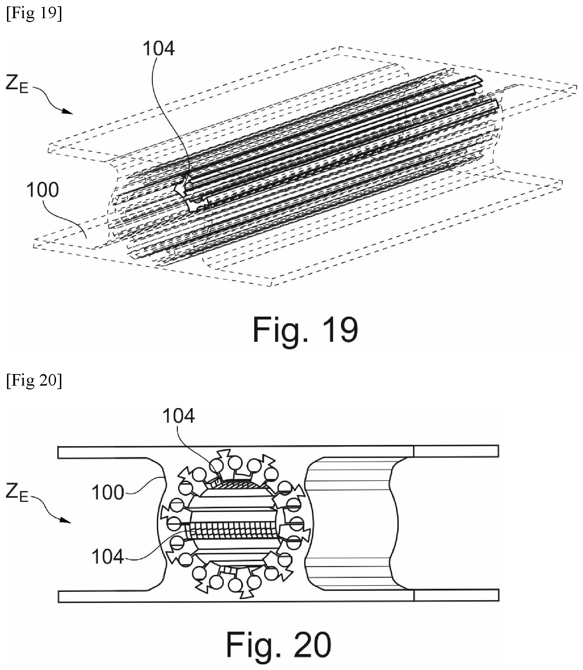

Les figures 6 à 23 se rapportent à un caloduc 1 axisymétrique de forme générale cylindrique dans lequel au moins l'évaporateur Z_{E} est réalisé par frettage entre au moins deux pièces, la frette étant la partie extérieure périphérique et la frettée étant au moins une des pièces qui s'enserre à l'intérieur de la frette. Typiquement, le caloduc 1 présente un diamètre extérieur égale à 13,2mm.

Quel que soit l'exemple de réalisation pour l'évaporateur, les pièces frettées entre elles respectent avantageusement les contraintes suivantes :
- la largeur des canaux de liaison 12 est comprise entre 50 et 200µm ;
- les canaux de liaison 12 sont suffisants en nombre au niveau de la source chaude pour favoriser l'évaporation via les lignes triples qu'ils permettent de mettre en œuvre, i.e. pour la formation des ménisques d'interface solide/liquide/vapeur ;
- les pertes de charge générées par la géométrie des pièces frettées sont les plus faibles possible, afin de favoriser une limite de fonctionnement capillaire la plus élevée possible.

Les figures 6 à 12 se rapportent à un mode selon lequel les deux pièces à fretter 100, 101 ont une section générale de couronne, les deux couronnes étant concentriques et s'insèrent l'une sur l'autre.

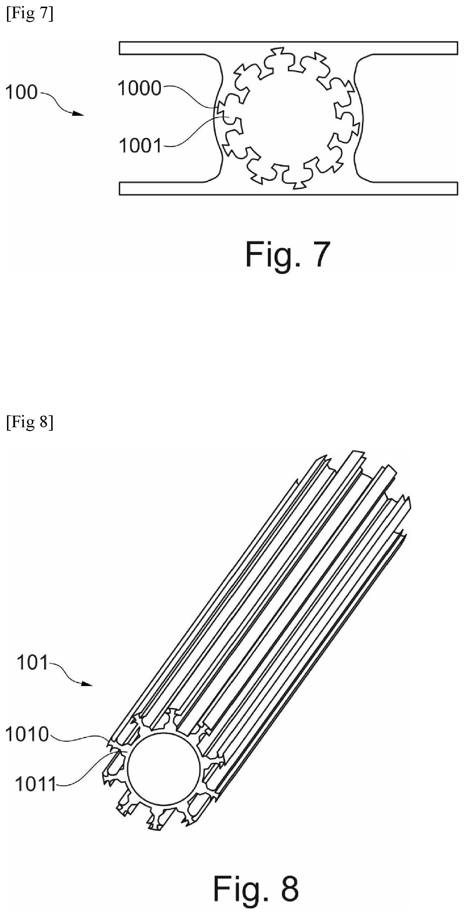

Comme illustrée sur les figures 6 et 7, la frette 100 est un profilé réalisé par extrusion avec des ailettes d'intégration réparties uniformément angulairement, qui délimitent des rainures 1000 et 1001 destinées à former respectivement des zones de fixation de la frettée 101 et des canaux liquides 11.

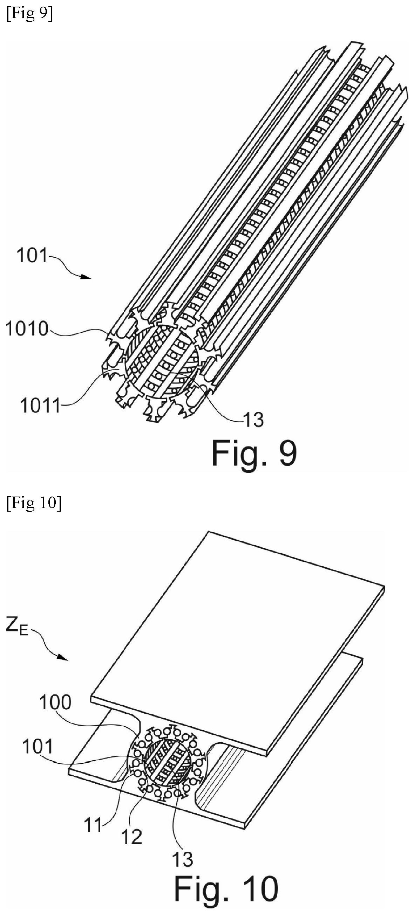

Comme illustrée sur les figures 8 et 9, la frettée 101 est un profilé réalisé par extrusion avec des ailettes d'intégration réparties uniformément angulairement, qui délimitent des nervures 1010 et 1011 destinées à former respectivement des zones de fixation dans la frette 100 et des canaux liquides 11. Le profilé extrudé (figure 8) est usiné d'orifices traversant afin d'obtenir la frettée 101 (figure 9). Le creux central 13 est destiné à former le canal vapeur de l'évaporateur Z_{E}.

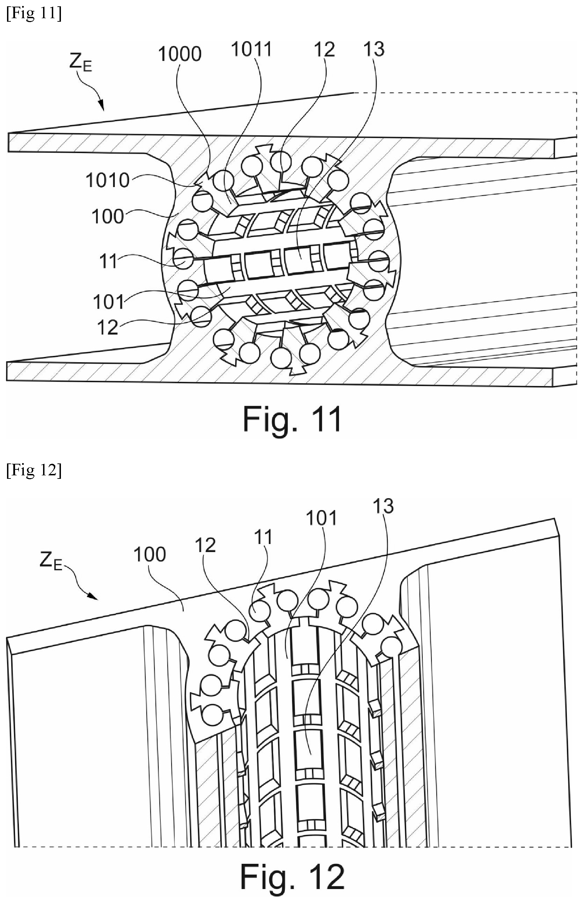

Les figures 10 et 11 montrent un évaporateur Z_{E} obtenu par le frettage de la frettée 101 dans la frette 100, les nervures 1010 étant insérées individuellement sans montage dans les rainures 1000.

La figure 12 montre la communication entre un canal liquide 11 et un canal vapeur 13 par un canal de liaison 12.

La réalisation de l'évaporateur avec des pièces frettées peut être identique pour la portion adiabatique et le condenseur. Autrement dit, le caloduc 1 peut être monobloc est de section transversale identique sur toute sa longueur, i.e. de l'évaporateur au condenseur.

Alternativement, on peut différencier les différentes portions, que l'on peut assembler ensemble par soudage, de préférence par emboitement préalable.

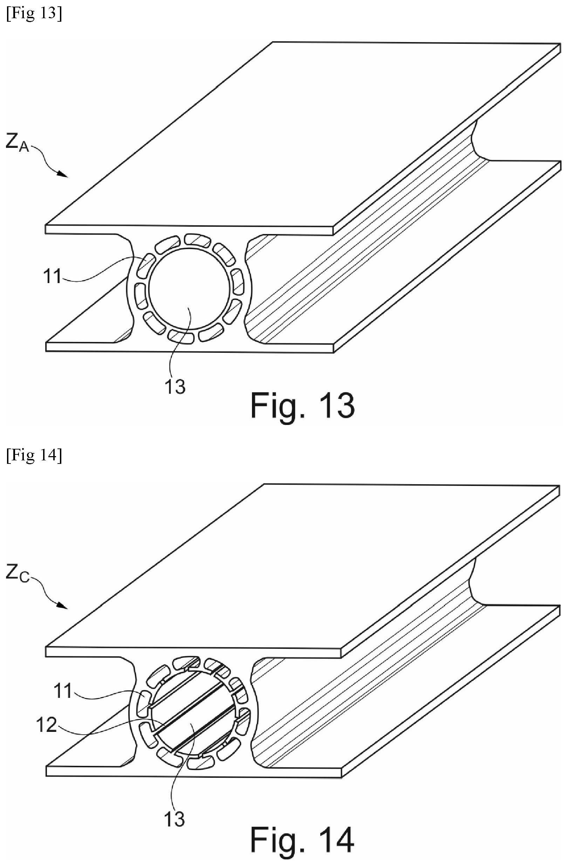

La figure 13 montre une variante de réalisation de portion adiabatique Z_{A}, sous la forme d'un profilé unique extrudé, qui présente des canaux liquides 11 non communicant avec le canal vapeur 13 central.

La figure 14 montre un condenseur Zc, également sous la forme d'un profilé unique extrudé.

Les canaux de liaison 12 sont de plus grande largeur que ceux de l'évaporateur. Leur présence permet de créer une force de pompage capillaire et d'alimenter les canaux liquides 11 périphériques de sorte qu'ils guident la phase liquide condensée vers l'évaporateur et reproduisent le cycle thermodynamique d'évaporation/condensation du caloduc.

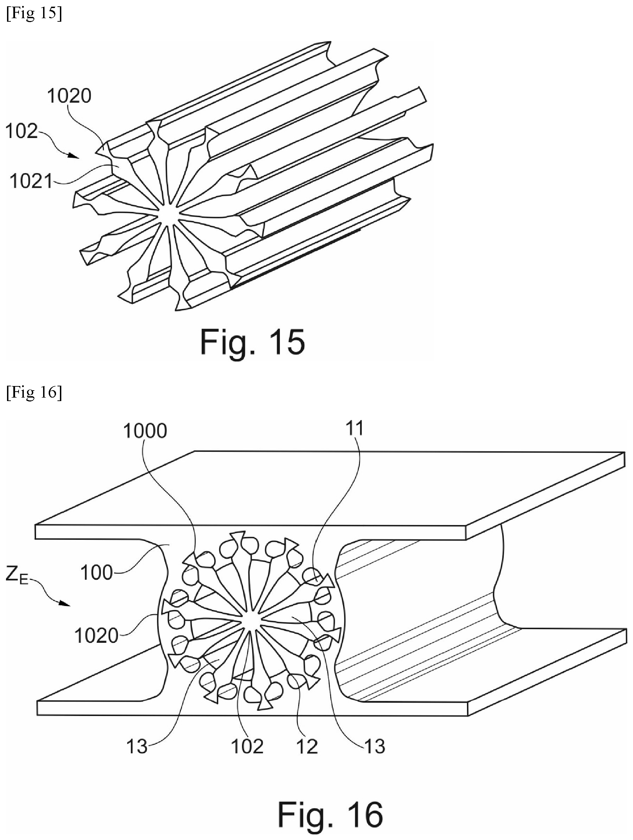

Les figures 15 et 16 illustrent un deuxième mode de réalisation d'un caloduc 1 à canaux réentrants de forme cylindrique dans lequel une pluralité de canaux liquides 11 sont régulièrement répartis angulairement et débouchent chacun par un canal de liaison 12 sur un canal vapeur 13 distinct des autres.

Pour ce faire, la frettée 102 axisymétrique est un profilé réalisé par extrusion qui présente des ailettes pleines réparties régulièrement angulairement et qui s'étendent chacune radialement depuis un axe central plein. Chacune des ailette délimite des nervures 1020 et 1021 destinées à former respectivement des zones de fixation dans la frette 100 et des canaux liquides 11.

Ce mode présente l'avantage de ne pas avoir à usiner la frettée 102. En revanche, ce mode s'applique à un caloduc de section transversale non identique sur sa longueur. Ainsi, seule une portion, de préférence l'évaporateur, peut être mise en œuvre avec deux pièces 100, 102 assemblées par frettage, les deux autres portions différenciées étant alors assemblées par soudage. En effet, la frettée 102 engendre des vitesses de vapeur plus importantes avec plus de parois, ce qui a pour conséquence de générer des pertes de charges plus importantes à puissance thermique identique à transporter et in fine une capacité de transport légèrement inférieur et potentiellement une limite de pompage capillaire également plus faible pour le caloduc 1.

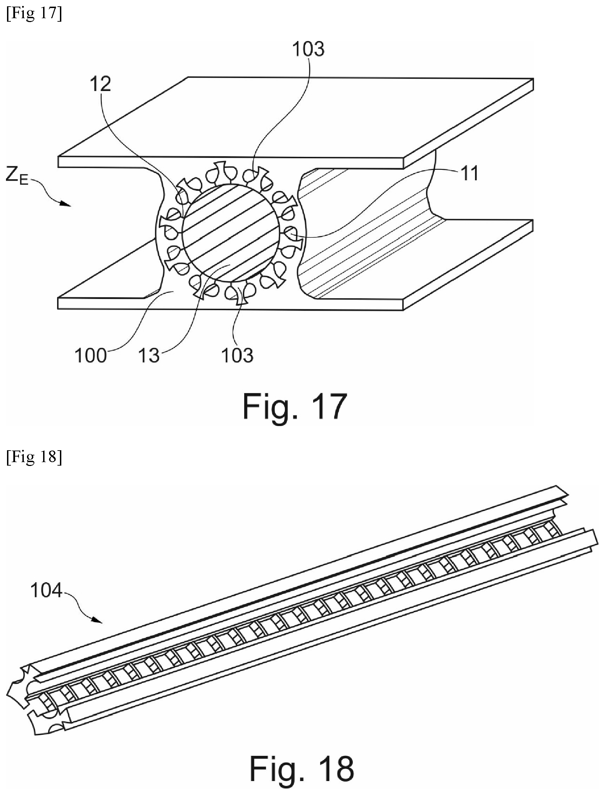

La figure 17 montre un troisième mode de réalisation de caloduc à canaux réentrants de forme cylindrique dans lequel plusieurs inserts indépendants 103, sous la forme de profilés extrudés, forment chacun une pièce frettée dans frette sous la forme d'une couronne 100, quand un gradient de température est imposé). Ce mode est de préférence mise en œuvre pour un caloduc de section transversale unique sur sa longueur, mais peut aussi être réalisé seulement à l'évaporateur Z_{E}. Dans la solution illustrée, les faibles dimensions individuelles des inserts 103 permettent de démultiplier les ligne triples. Pour l'insertion des inserts fins 103, on peut mettre en œuvre un outil de type porte insert amovible. On peut aussi envisager de réaliser des inserts plus massifs, plus faciles à manipuler.

Les figures 18 à 20 se rapportent à un quatrième mode dans lequel le profilé extrudé unique 101 de la figure 9 est remplacé par une pluralité de profilés extrudés 104 formant chacune une portion cylindrique. Ces profilés extrudés 104 sont tous frettés individuellement dans la frette 100 pour former au moins une des portions du caloduc, de préférence au moins l'évaporateur Z_{E}, comme illustré.

Que toutes les portions du caloduc soient de section transversale identique et réalisées par frettage d'au moins deux pièces, ou bien qu'une seule portion le soit et assemblée aux autres par soudage, la fabrication du caloduc 1 est finalisée par soudage de deux bouchons d'extrémité 105, 106.

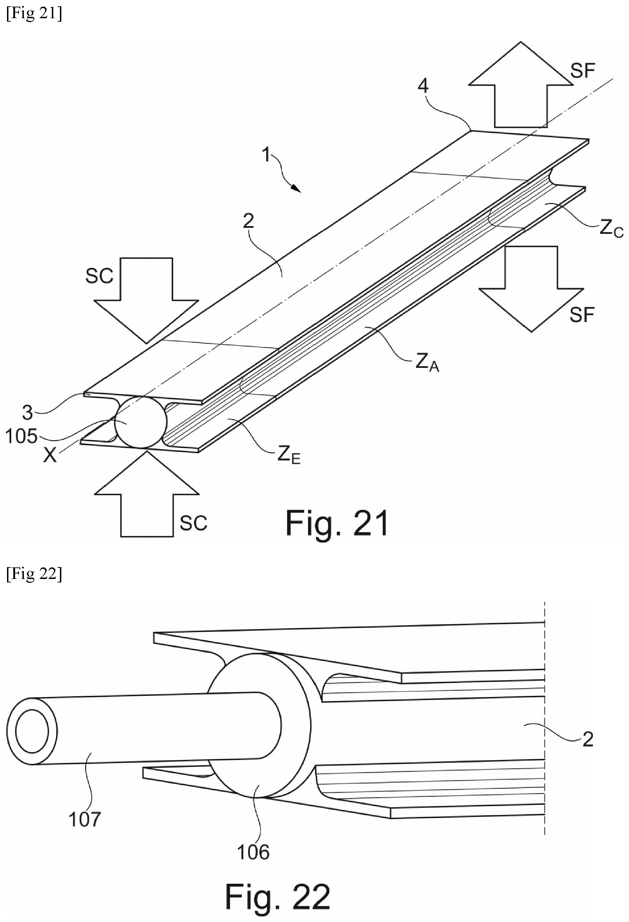

Ainsi, comme illustré à la figure 21, le caloduc 1 comporte une enceinte étanche 2 s'étendant selon l'axe longitudinal X entre une première extrémité longitudinale 3 et une deuxième extrémité longitudinale 4. La première extrémité 3 est par exemple destinée à être à être échauffée par une source chaude SC pour former au sein de l'enceinte un évaporateur Z_{E,}. La deuxième extrémité longitudinale 4 est destinée à être refroidie par une source froide SF pour former au sein de l'enceinte un condenseur Z_{C}. L'enceinte étanche 2 délimite intérieurement une portion adiabatique ZA entre l'évaporateur et le condenseur.

La source chaude est par exemple un composant électrique ou électronique, un stockage de chaleur, un réacteur chimique exothermique. La source froide est par exemple une surface radiative, des ailettes en convection forcée, des plaques froides en écoulement mono ou diphasique, un stockage de froid, une réaction chimique endothermique...

Comme montré à la figure 22, un des deux bouchons d'extrémité 106 intègre avantageusement un queusot de remplissage 107, qui sert à introduire à l'intérieur de l'enceinte étanche 2, le fluide de travail pur du caloduc, avant d'être fermé pour que le volume interne soit étanche et résistant à la pression.

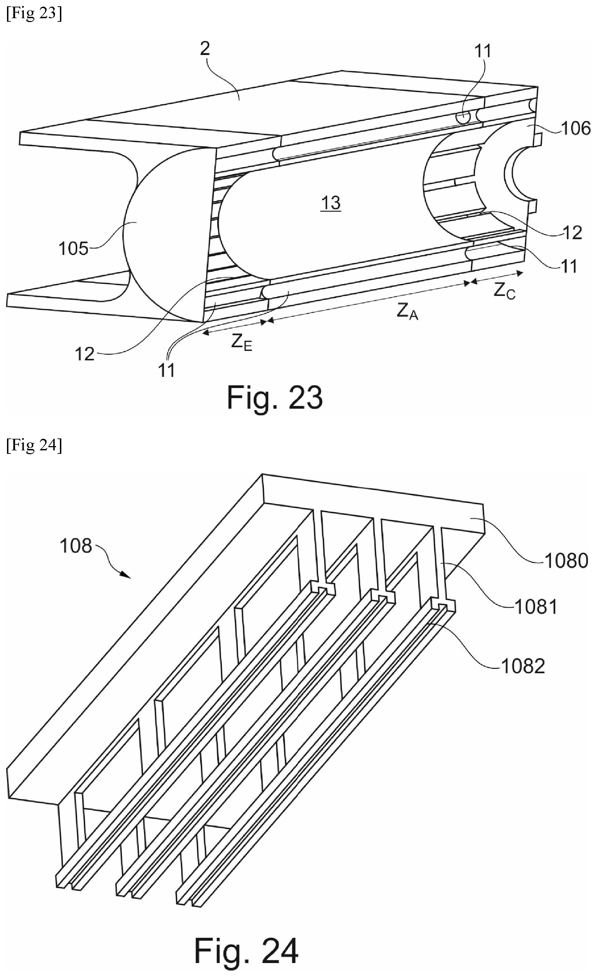

La figure 23 montre un caloduc 1 avec différentes portions différenciées, seul l'évaporateur Z_{E} étant réalisé par frettage d'au moins deux pièces 100 ; 101, 102, 103 104 comme détaillé ci-avant. La portion adiabatique Z_{A} et le condenseur Z_{C} constitués chacun d'un profilé unique extrudé, sont soudées ensemble et la portion adiabatique est directement soudée à l'évaporateur Z_{E}.

Les figures 24 à 40 se rapportent à un caloduc 1 de forme générale parallépipédique dans lequel au moins l'évaporateur Z_{E} est réalisé par frettage entre au moins deux pièces, qui sont également soudées entre elles. La fretté et la frettée forment chacune une portion du parallépépipède. Typiquement, le caloduc 1 présente des dimensions extérieures égales à 13,2mm x 15mm.

Comme pour des caloducs 1 de forme générale cylindrique, tels qu'illustrés aux figures 6 à 23, un caloduc 1 parallépipédique peut être de section transversale identique sur toute sa longueur, et réalisée par un profilé unique ou peut comprendre des portions d'évaporation, adiabatique et de condensation différenciées, puis assemblées par soudage. Chaque portion peut être constituée de plusieurs pièces frettées ensemble.

Les géométries configurables sont plus nombreuses pour un caloduc de forme parallépipédique, notamment par le nombre de pièces et les emboitements pour les frettages. Les canaux de liaison 12 obtenus par frettage et soudage des portions parallépipédiques sont ici aussi faibles, typiquement comprises entre 50 et 200 µm.

Plusieurs paramètres géométriques impactent les performances, thermique et mécanique du caloduc, et des compromis peuvent être trouvés, suivant les spécifications de fonctionnement et d'intégration du caloduc.

A titre d'exemples :
- la présence de parois au niveau des canaux liquides dans l'évaporateur est préférée, afin de minimiser la résistance thermique de la transmission du flux aux interfaces liquide/vapeur et leurs lignes triples où s'effectuent une grande partie de l'évaporation ;
- les parois au niveau des canaux liquides et vapeur améliorent la tenue mécanique du caloduc, qui peut être soumis à de fortes pression avec l'utilisation de certains fluides comme l'ammoniac, typiquement à plus de 50bar à 90°C, cette meilleure tenue mécanique permettant de minimiser les épaisseurs des parois périphériques et un gain de poids non négligeable ;
- la présence accrue de parois entraine plus de frottement avec le fluide de travail et in fine réduit la puissance limite de pompage capillaire du caloduc, qui est un paramètre essentiel pour un caloduc en aluminium fonctionnant avec l'ammoniac comme fluide ;
- les pièces (frète ou frettée) à assembler par frettage peuvent être usinées pour fonctionnaliser des portions du caloduc, comme un évidement des parois des canaux liquides et vapeur au niveau de la portion adiabatique, ou partiellement au condenseur pour assurer un compromis transmission du flux thermique et homogénéisation des débits massiques dans les canaux liquides.

Les figures 24 à 27 se rapportent à un premier mode selon lequel les deux pièces à fretter 108, 109 ont une section générale d'une portion de parallépipède, les deux pièces s'insèrent l'une dans l'autre par certains de leurs éléments puis soudées entre elles longitudinalement pour former l'évaporateur Z_{E} et ensemble à la portion adiabatique le cas échéant.

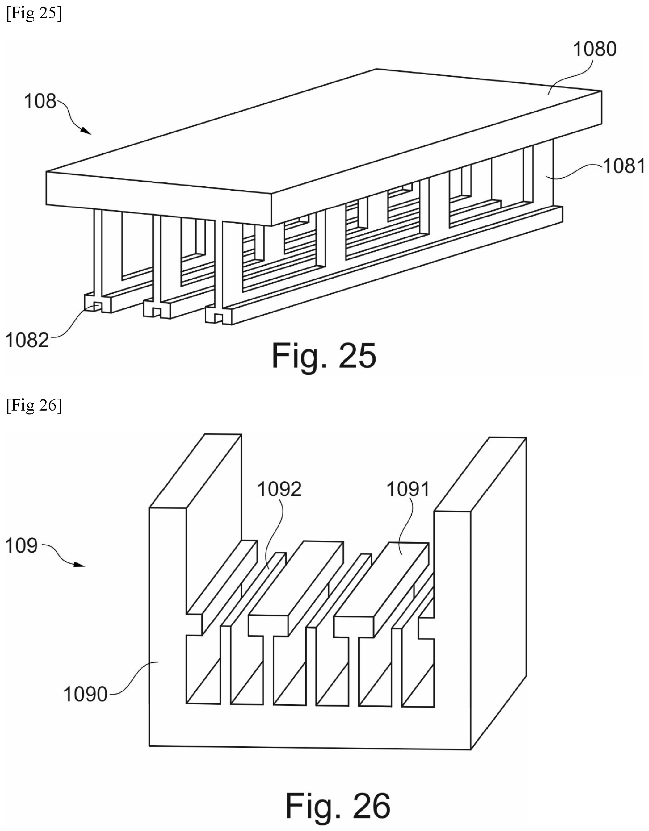

Comme illustrée sur les figures 24 et 25, la frette 108 est un profilé réalisé par extrusion comprenant une paroi plane 1080 et des parois ajourées 1081 qui s'étendent depuis la paroi plane 1080 en étant réparties uniformément parallèles entre elles avec des extrémités rainurées 1082, destinées à former respectivement des zones de fixation de la frettée 109 et un canal vapeur 13. Les parois 1081 sont ajourées par usinage une fois le profilé extrudé, afin de générer moins de pertes de charge par frottement et de également de diminuer la masse. Ces ajours sont de préférence réalisées à la fois pour l'évaporateur, la portion adiabatique et le condenseur.

Comme illustrée sur la figure 26, la frettée 109 est un profilé réalisé par extrusion comprenant une paroi 1090 en forme de U et des parois pleines 1091, 1092 qui s'étendent depuis le fond du U en étant réparties uniformément parallèles entre elles. Les parois 1091, 1092 sont destinées à former les canaux liquides 11 et certaines d'entre elles, les parois 1092 sont destinées à former respectivement des zones de fixation dans la frette 108.

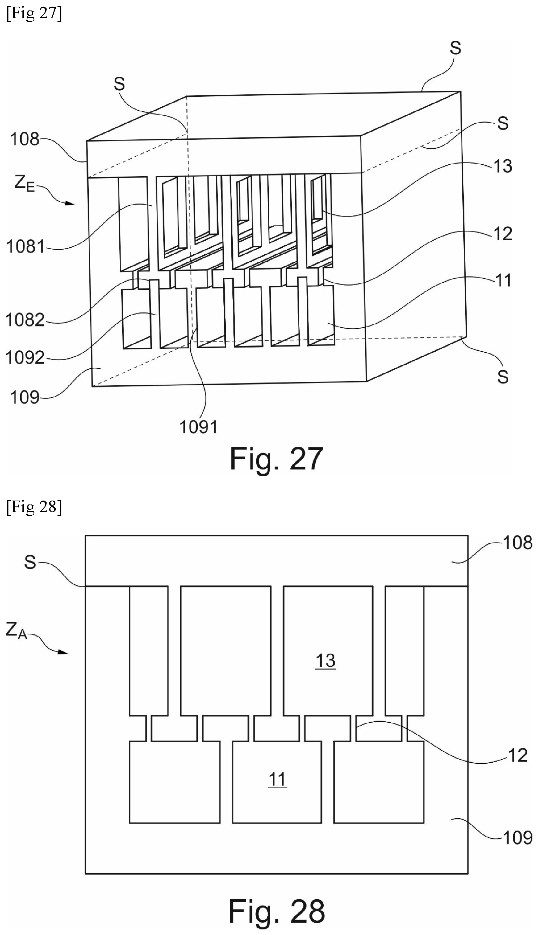

Comme montré à la figure 27, le frettage entre les pièces extrudées 108, 109 est réalisé par l'insertion des parois pleines 1092 dans les rainures d'extrémité 1082 des parois ajourées 1081. Puis les deux pièces 108, 109 sont soudées entre elles par des soudures S au niveau des jonctions des parois planes périphériques 1080, 1090. Les canaux liquide 11, les canaux de liaison 12 et le canal vapeur sont alors définis. De préférence, les canaux de liaison au niveau du condenseur peuvent être moins étroits qu'au niveau de l'évaporateur.

Les parois 1091, 1092 délimitant les canaux liquides 11 sont pleines à l'évaporateur pour bien transmettre le flux aux canaux de liaison 12 où s'établissent les ménisques d'interface. Au condenseur, on peut prévoir des communications entre canaux liquides 11. Une réalisation par extrusion ne permet pas de telles communications. On peut ainsi prévoir d'usiner/de raboter les extrémités des parois 1091, 1092 du condenseur pour réaliser ces communications.

Dans le cas où des portions différenciées sont mises en œuvre pour l'évaporateur, la portion adiabatique et le condenseur, la partie adiabatique peut présenter différentes configurations.

La figure 28 montre une première configuration avantageuse de la portion adiabatique Z_{A} dans laquelle certaines parois délimitant les canaux liquides 11 sont supprimées par rapport à celles de l'évaporateur. Il peut s'agir des parois 1092 avec lesquelles le frettage est réalisé au niveau de l'évaporateur. Cette première configuration permet de conserver l'accroche du ménisque d'interface liquide-vapeur sur toute la longueur du caloduc, et minimiser les frottements. La portion adiabatique peut être réalisée ici avec deux pièces distinctes 108, 109 soudées entre elles par soudures S, sans frettage.

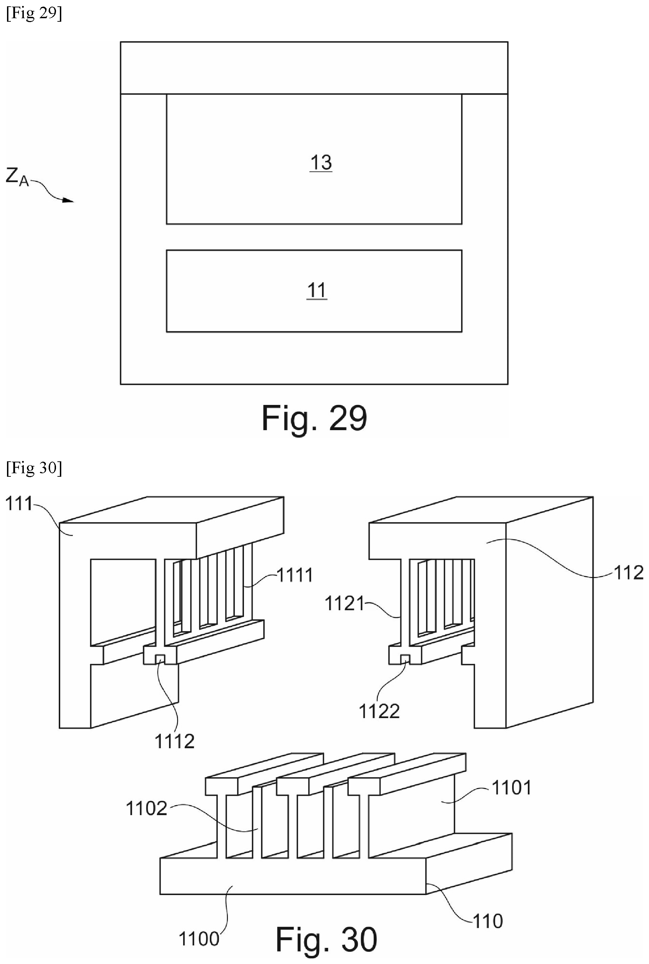

La figure 29 montre une deuxième configuration avantageuse de la portion adiabatique Z_{A} dans laquelle les canaux liquide 11 et vapeur 13 ne communiquent pas entre eux. Cette deuxième configuration permet de minimiser les pertes de charge par frottement. La portion adiabatique peut être réalisée ici selon un profilé monobloc extrudé.

La figure 30 se rapporte à un deuxième mode selon lequel trois pièces à fretter 110, 111, 112 ont une section générale d'une portion de parallépipède, deux des pièces 111, 112 s'insèrent dans la troisième 112 par certains de leurs éléments puis soudées entre elles longitudinalement pour former l'évaporateur Z_{E} et ensemble à la portion adiabatique le cas échéant. Les deux pièces 111, 112 en forment de L sont symétriques. Cet autre mode permet de pouvoir évider les parois des canaux liquides 11. Les deux frettes 111, 112 sont des profilés réalisés par extrusion comprenant chacune une paroi en forme de L 1110, 1120 et des parois ajourées 1111, 1121 qui s'étendent depuis la paroi en L en étant réparties uniformément parallèles entre elles avec des extrémités rainurées 1112, 1122 destinées à former respectivement des zones de fixation de la frettée 110 et un canal vapeur 13. La frettée 110 est un profilé réalisé par extrusion comprenant une paroi plane 1100 et des parois pleines 1101, 1102 qui s'étendent depuis la paroi plane 1100 en étant réparties uniformément parallèles entre elles. Les parois 1101, 1102 sont destinées à former les canaux liquides 11 et certaines les deux frettes 111, 112.

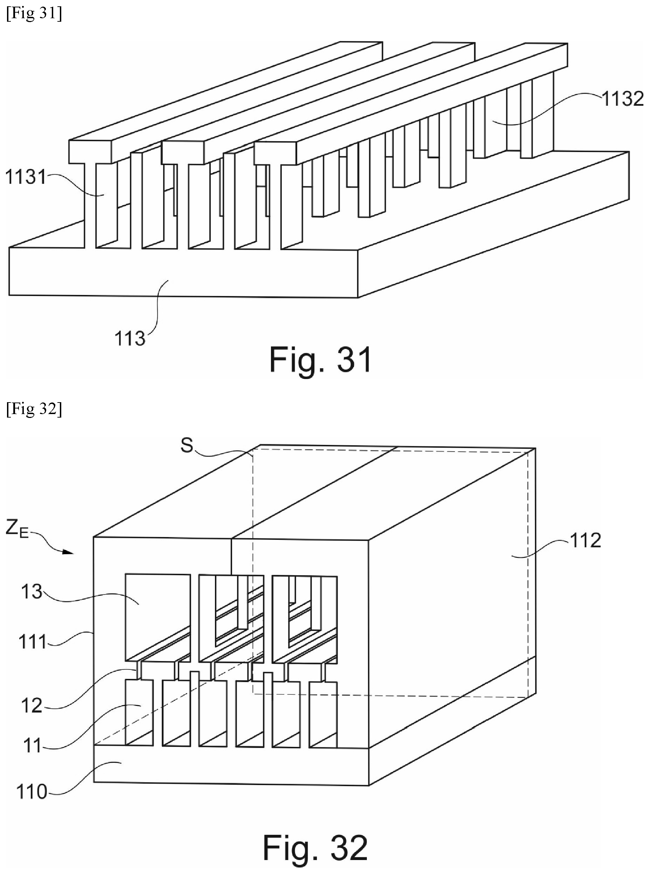

La figure 31 montre une partie 113 de la portion adiabatique Z_{A} réalisé avec un profilé extrudé avec ajours dans les parois 1131, 1132 pour que les canaux liquides communiquent entre eux.

La figure 32 illustre un évaporateur Z_{E} obtenu selon le deuxième mode avec les trois pièces 110, 111, 112 frettées entre elles et soudées ensemble selon les lignes de soudure S (en pointillés). Les portions adiabatiques et condenseur qui sont soudées à cet évaporateur Z_{E} peuvent être réalisées comme selon les figures 28 ou 29.

Un troisième mode de réalisation peut être envisagé pour rendre plus modulable la configuration du caloduc, avec en outre l'avantage de ne pas mettre en œuvre de soudure longitudinale pour l'assemblage finale, seules des plaque de fermeture d'extrémité devant être soudées, comme détaillé par la suite.

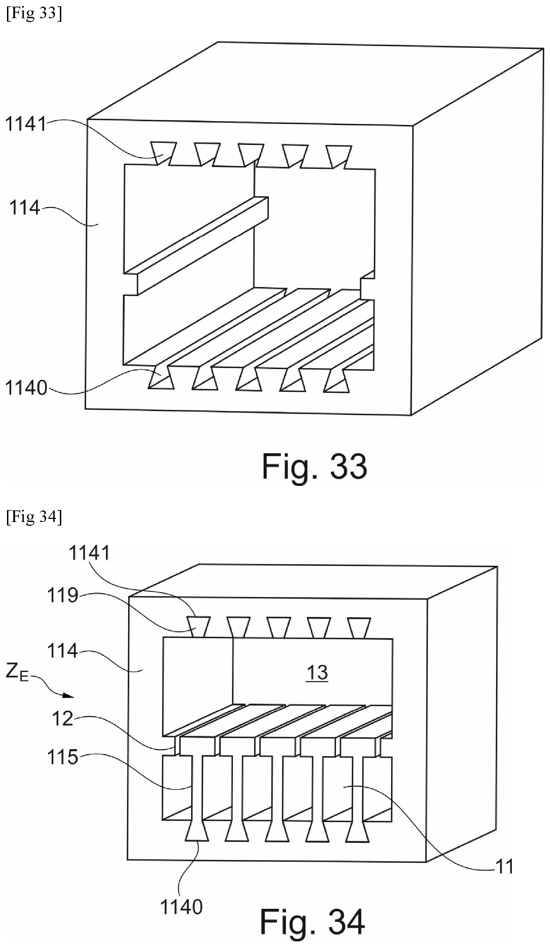

Selon ce troisième mode, comme montré à la figure 33, un profilé monobloc de forme parallélépipédique 114 est réalisé par extrusion, avec sur au moins une de ses faces intérieures ou sur deux de ses faces intérieures opposées, des rainures 1140, 1141.

Comme illustré sur les différentes variantes des figures 34 à 37, des inserts individuels 115, 116, 117, 118 sont frettés dans une des rainures trapézoïdales 1140, 1141 de sorte à définir les parois des canaux liquides 11 et le positionnement des canaux de liaison 13 où va s'opérer le ménisque d'interface liquide vapeur. Lorsque des parois ne sont pas nécessaires, des inserts obturateurs 119 peuvent être frettés dans les rainures correspondantes. Les inserts définissant les parois peuvent être évidés si nécessaire suivant les spécifications attendues en fonction de la portion (évaporateur, portion adiabatique, condenseur). Sur une même longueur de caloduc, dans une même rainure, plusieurs types d'insert ou obturateurs peuvent être positionnés. Comme précédemment, des portions fonctionnalisées peuvent être aussi mises en place et assemblées par soudage périphérique bout à bout afin de constituer un caloduc entier.

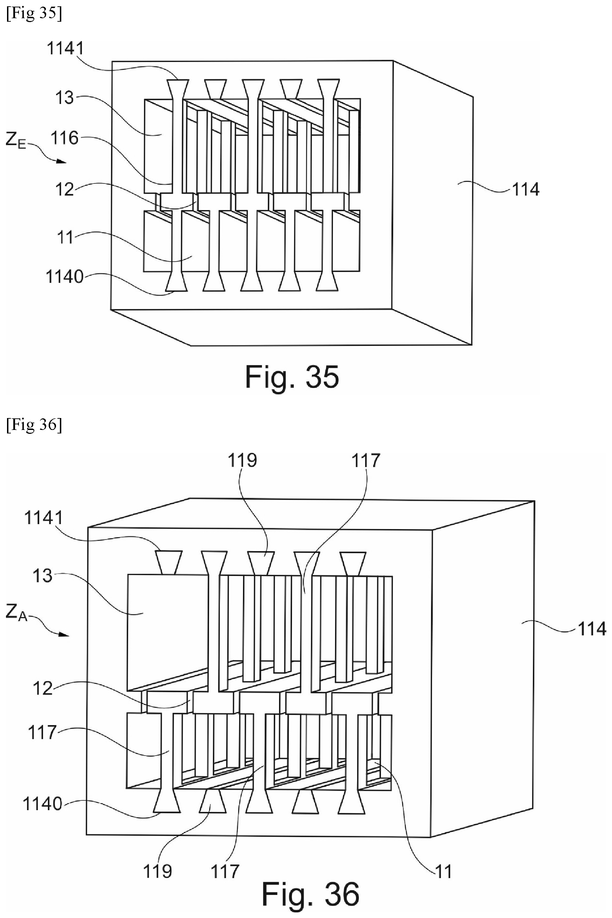

Les figures 34 et 35 illustrent deux variantes de réalisation de l'évaporateur avec les inserts 115, 116 frettés individuellement dans tout ou partie des rainures 1140, 1141 du profilé parallépipédique 114 qui peuvent être l'une ou l'autre mises en œuvre, en fonction des spécifications de la source chaude à thermaliser.

La figure 34 montre une configuration où seules les parois des canaux liquides 11 définies par les inserts 115 sont privilégiées pour la transmission du flux thermique de la source chaude. Ainsi, un seul canal vapeur 13 sans paroi intérieure est délimité au-dessus de plusieurs canaux liquide 11.

La figure 35 montre la présence de parois évidées délimitant le canal vapeur 13 et définies par les inserts 116 permet d'augmenter la tenue mécanique du caloduc et d'en réduire potentiellement l'épaisseur de ses parois périphériques 114 et sa masse.

La figure 36 illustre une portion adiabatique Z_{A} dans laquelle les parois des canaux liquides 11 et vapeur 13 définies par les inserts 117 sont minimisées afin de limiter les frottements, la configuration suivante peut être mise en place.

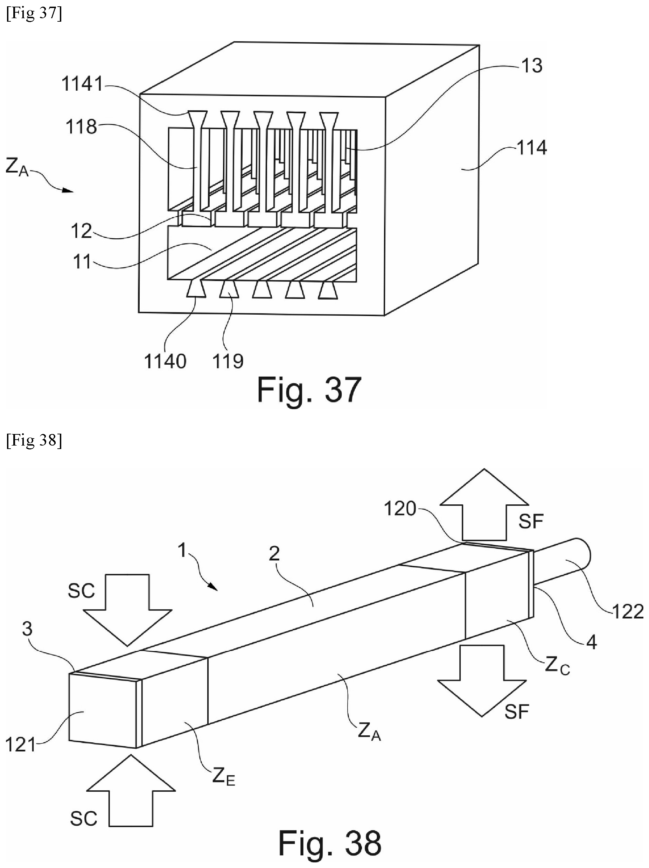

La figure 37 illustre une portion adiabatique Z_{A} dans laquelle seules les parois du canal vapeur 13 sont définies par les inserts 118, un seul canal liquide 11 sans paroi étant ainsi réalisé.

On peut aussi envisager une portion adiabatique avec une partie centrale pleine, au niveau des canaux de liaison, ce qui a l'avantage de supprimer les parois.

Que toutes les portions du caloduc soient de section transversale identique et réalisées par frettage d'au moins deux pièces, ou bien qu'une seule portion le soit et assemblée aux autres par soudage, la fabrication du caloduc 1 est finalisée par soudage de deux plaques de fermeture d'extrémité 120, 121.

Ainsi, comme illustré à la figure 38, le caloduc 1 comporte une enceinte étanche 2 s'étendant selon l'axe longitudinal X entre une première extrémité longitudinale 3 et une deuxième extrémité longitudinale 4. La première extrémité 3 est par exemple destinée à être à être échauffée par une source chaude SC pour former au sein de l'enceinte un évaporateur Z_{E,}. La deuxième extrémité longitudinale 4 est destinée à être refroidie par une source froide SF pour former au sein de l'enceinte un condenseur Z_{C}. L'enceinte étanche 2 délimite intérieurement une portion adiabatique ZA entre l'évaporateur et le condenseur.

La source chaude est par exemple un composant électrique ou électronique, un stockage de chaleur, un réacteur chimique exothermique. La source froide est par exemple une surface radiative, des ailettes en convection forcée, des plaques froides en écoulement mono ou diphasique, un stockage de froid, une réaction chimique endothermique...

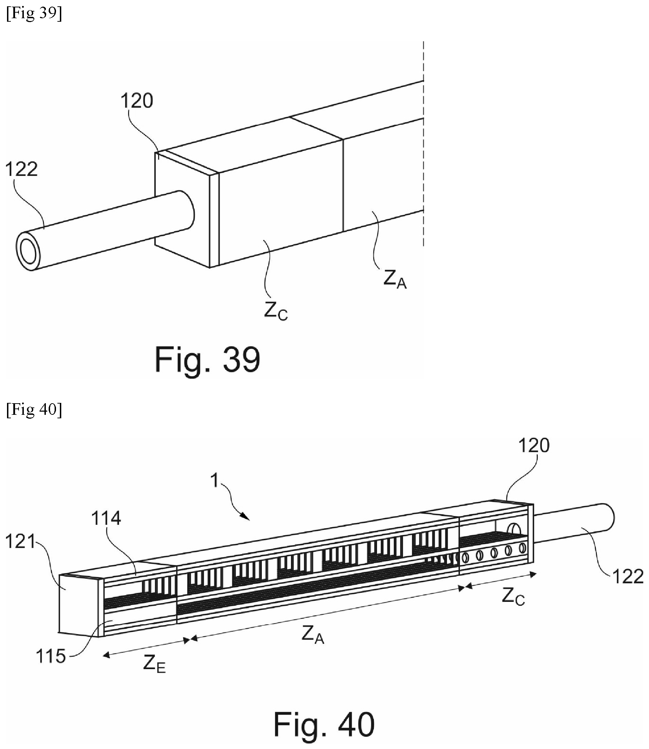

Comme montré à la figure 39, un des deux plaques de fermeture d'extrémité 120 intègre avantageusement un queusot de remplissage 122, qui sert à introduire à l'intérieur de l'enceinte étanche 2, le fluide de travail pur du caloduc, avant d'être fermé pour que le volume interne soit étanche et résistant à la pression.

La figure 40 montre un caloduc 1 avec différentes portions différenciées, seul l'évaporateur Z_{E} étant réalisé par frettage d'inserts 115 dans un profilé parallépipédique 114 comme détaillé ci-avant. La portion adiabatique Z_{A} et le condenseur Z_{C} constitués chacun d'un profilé unique extrudé, sont soudées ensemble et la portion adiabatique est directement soudée à l'évaporateur Z_{E}.

D'autres avantages et améliorations pourront être apportées sans pour autant sortir du cadre de l'invention.

L'invention n'est pas limitée aux exemples qui viennent d'être décrits; on peut notamment combiner entre elles des caractéristiques des exemples illustrés au sein de variantes non illustrées.

Un caloduc est rempli d'un fluide de travail diphasique, il peut s'agir d'un fluide bien connu de l'homme du métier. Celui-ci est choisi par exemple en fonction de la gamme de température de fonctionnement et de stockage du dispositif, en fonction des contraintes dues à la pression, l'inflammabilité, la toxicité du fluide et de la compatibilité chimique entre le fluide et le matériau formant le caloduc.

De plus, certains fluides ne sont pas compatibles avec certains matériaux, des réactions d'oxy-réduction pouvant conduire à des phénomènes corrosifs impliquant des produits de réaction, par exemple des gaz incondensables, dégradant le fonctionnement hydrodynamique des caloducs.

A titre d'exemple, pour un caloduc selon l'invention réalisé de préférence en aluminium. Il peut être aussi en alliage d'aluminium, en nickel, en cuivre, en titane ou en alliage à base d'une combinaison d'entre eux, assemblé par brasure eutectique, on peut utiliser comme fluide l'ammoniac, l'eau, l'acétone, le méthanol, ....

Du fait des limites d'utilisation, entre les fluides de travail et les métaux cités, les couples envisagés peuvent être comme suit :

| **Fluide de travail** | **Métal(ux) du caloduc** |
|---|---|
| Ammoniac | Aluminium, acier, acier inoxydable, nickel |
| Méthanol | Cuivre, acier inoxydable |
| Acétone | Aluminium, acier inoxydable |
| Eau | Cuivre, nickel, titane |

### Liste des références citées

[1]: Christine Hoa :«*Thermique des caloducs à rainures axiales : études et réalisations pour des applications spatiales*». Université de Poitiers, 2004.
[2]: Ömür, Cem, A. Bilge Uygur, İlhami Horuz, H. Gürgüç I 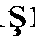 ik, Sadik Ayan, et Murat Konar. 2018. « *Incorporation of manufacturing constraints into an algorithm for the determination of maximum heat transport capacity of extruded axially grooved heat pipes* ». International Journal of Thermal Sciences 123 (janvier): 181-90. https://doi.org/10.1016/j.ijthermalsci.2017.09.016.

## Revendications

1. Caloduc (1) à canaux réentrants, s'étendant le long d'une direction longitudinale (X), comprenant une enceinte étanche (2) s'étendant entre une première extrémité longitudinale (3), destinée à être échauffée par une source chaude SC pour former, au sein de l'enceinte, un évaporateur et une deuxième extrémité longitudinale (4) destinée à être refroidie par une source froide SF pour former, au sein de l'enceinte, un condenseur, l'enceinte étanche délimitant une portion adiabatique entre l'évaporateur et le condenseur, au moins une portion parmi l'évaporateur, la portion adiabatique et le condenseur comprenant au moins deux pièces (100, 101) assemblées mécaniquement l'une à l'autre de manière permanente en définissant entre elles au moins un canal de liaison définissant une interface liquide-vapeur reliant un canal de circulation de vapeur et un(des) canal(ux) de circulation de liquide(s).

2. Caloduc (1) à canaux réentrants selon la revendication 1, les deux pièces étant frettées l'une dans l'autre et/ou ou soudées et/ou brasées et/ou collées l'une à l'autre .

3. Caloduc (1) à canaux réentrants selon la revendication 1 ou 2, l'évaporateur, la portion adiabatique et le condenseur étant de section transversale uniforme selon la direction longitudinale (X) et formant un ensemble monobloc.

4. Caloduc (1) à canaux réentrants selon la revendication 1 ou 2, au moins deux portions parmi l'évaporateur, la portion adiabatique et le condenseur étant de section transversale non uniforme selon la direction longitudinale (X) et assemblées entre elles par soudage.

5. Caloduc (1) à canaux réentrants selon la revendication 4, les portions assemblées entre elles par soudage étant préalablement emboitées au moins partiellement l'une dans l'autre.

6. Caloduc (1) à canaux réentrants selon l'une des revendications précédentes, la largeur d'un canal de liaison de la (des) portion(s) à deux pièces assemblées l'une à l'autre étant inférieure à 500 µm, de préférence comprise entre 50 et 200 µm.

7. Caloduc (1) à canaux réentrants selon l'une des revendications précédentes, les au moins deux pièces étant assemblées l'une à l'autre en définissant entre elles également le canal de circulation de vapeur et le(les) canal(ux) de circulation de liquide(s).

8. Caloduc (1) à canaux réentrants selon l'une des revendications précédentes, au moins une des deux pièces étant un profilé extrudé.

9. Caloduc (1) à canaux réentrants selon l'une des revendications précédentes, axisymétrique de forme générale cylindrique, au moins une portion parmi l'évaporateur, la portion adiabatique et le condenseur comprenant au moins une pièce intérieure assemblée mécaniquement de manière permanente à une pièce extérieure creuse comprenant une paroi cylindrique périphérique (10), en définissant au moins un canal liquide (11) à section transversale en forme générale d'Omega, et débouchant par l'intermédiaire d'un canal de liaison (12) sur un canal vapeur (13), les canaux liquide, de liaison et vapeur étant rectilignes et s'étendant selon la direction X.

10. Caloduc (1) à canaux réentrants selon la revendication 9, la au moins une portion étant constituée de deux pièces, de préférence frettées l'une dans l'autre, en définissant une pluralité de canaux liquide (11) régulièrement répartis angulairement et débouchant tous par un canal de liaison sur un unique canal vapeur, central cylindrique.

11. Caloduc (1) à canaux réentrants selon la revendication 9, la au moins une portion étant constituée de plus de deux pièces dont une pièce intérieure et une pluralité de pièces intérieures, de préférence frettées les dans l'autre, en définissant une pluralité de canaux liquide (11) régulièrement répartis angulairement et débouchant tous par un canal de liaison sur un unique canal vapeur, central cylindrique.

12. Caloduc (1) à canaux réentrants selon la revendication 9, seule une portion, de préférence l'évaporateur, étant constituée de deux pièces, de préférence frettées l'une dans l'autre, en définissant une pluralité de canaux liquides (11) régulièrement répartis angulairement et débouchant chacun par un canal de liaison sur un canal vapeur distinct des autres.

13. Caloduc (1) à canaux réentrants selon l'une des revendications 1 à 8, de forme générale parallélépipédique, au moins une portion parmi l'évaporateur, la portion adiabatique et le condenseur comprenant une pièce formant une portion d'un parallépipède creux, assemblée mécaniquement de manière permanente à au moins une pièce formant une portion complémentaire du parallépipède en définissant au moins canal liquide (11) à section transversale rectangulaire ou carrée, et débouchant par l'intermédiaire d'un canal de liaison (12) sur un canal vapeur (13), les canaux liquide, de liaison et vapeur étant rectilignes et s'étendant selon la direction X.

14. Caloduc (1) à canaux réentrants selon la revendication 13, les deux portions complémentaires étant soudées longitudinalement au moins par leurs parois périphériques et frettées l'une dans l'autre au moins par leurs parois internes.

15. Caloduc (1) à canaux réentrants selon l'une des revendications 1 à 8, de forme générale parallélépipédique, au moins une portion parmi l'évaporateur, la portion adiabatique et le condenseur comprenant une pièce extérieure formant un parallépipède creux assemblé mécaniquement de manière permanente à au moins une pièce intérieure sous la forme d'un insert en définissant au moins canal liquide (11) à section transversale rectangulaire ou carrée, et débouchant par l'intermédiaire d'un canal de liaison (12) sur un canal vapeur (13), les canaux liquide, de liaison et vapeur étant rectilignes et s'étendant selon la direction X.

16. Caloduc (1) à canaux réentrants selon l'une des revendications précédentes, les au moins deux pièces assemblées mécaniquement l'une à l'autre de manière permanente présentant une rugosité inférieure ou égale à 0,1µm.

17. Caloduc (1) à canaux réentrants selon l'une des revendications précédentes, comprenant deux bouchons étanches soudés respectivement à la première et à la deuxième extrémités longitudinales, au moins un des deux bouchons intégrant au préalable un queusot de remplissage par le fluide de travail du caloduc.

18. Caloduc (1) à canaux réentrants selon l'une des revendications précédentes, le matériau constitutif des au moins deux pièces formant au moins la portion de l'enceinte étanche, étant choisi parmi l'aluminium, le cuivre, le nickel, un acier inoxydable ou un alliage à base d'au moins deux de ceux-ci, de préférence l'aluminium.

19. Système comprenant :
- une source froide (SF) ;
- une source chaude (SC) et
- au moins un caloduc (1) selon l'une des revendications précédentes, le caloduc étant agencé de sorte que le flux de chaleur (ϕ_{E}) de la source chaude (SC) sur l'évaporateur étant sur au moins une face latérale (21) de l'enceinte en regard du canal vapeur ou sur au moins une face latérale en regard du(des) canal(ux) liquide(s), tandis que l'extraction de chaleur au condenseur vers la source froide (SF) étant sur au moins une face latérale de l'enceinte en regard du(des) canal(ux) liquide(s), ou sur une face latérale perpendiculaire à celui-ci (ceux-ci).
